Europäisches Patentamt

European Patent Office

Office européen des brevets

(19)

(11) Veröffentlichungsnummer: **0 158 778 B1**

(12) **EUROPÄISCHE PATENTSCHRIFT**

(45) Veröffentlichungstag der Patentschrift:
09.08.89

(21) Anmeldenummer: 85101213.8

(22) Anmeldetag: 06.02.85

(51) Int. Cl.⁴: **C 09 K 11/67, C 09 K 11/54,**
**C 09 K 11/59, C 09 K 11/55,**
**C 09 K 11/64, C 09 K 11/66**

(54) Leuchtstoffe auf der Basis von mit Mangan aktiviertem Zinksilikat und Verfahren zu ihrer Herstellung (I).

(30) Priorität: 14.04.84 DE 3414125

(43) Veröffentlichungstag der Anmeldung:
23.10.85 Patentblatt 85/43

(45) Bekanntmachung des Hinweises auf die Patenterteilung: 09.08.89 Patentblatt 89/32

(84) Benannte Vertragsstaaten:
AT BE CH DE FR GB IT LI NL SE

(56) Entgegenhaltungen:
EP—A— 0 015 382
GB—A— 642 966
GB—A— 1 111 163
US—A— 3 208 950
US—A— 3 586 635

(73) Patentinhaber: Degussa Aktiengesellschaft
Weissfrauenstrasse 9
D-6000 Frankfurt am Main 1 (DE)

(72) Erfinder: Kiss, Akos, Dr. Dipl.-Chem.
Keplerstrasse 69
D-8750 Aschaffenburg (DE)
Erfinder: Kleinschmit, Peter, Dr. Dipl.-Chem.
Wildaustrasse 19
D-6450 Hanau (DE)
Erfinder: Völker, Werner, Dr. Dipl.-Chem.
Auf dem Niederberg 45
D-6368 Bad Vilbel (DE)
Erfinder: Halbritter, Günter, Dipl.-Ing.
Rhönstrasse 6
D-8752 Schöllkrippen (DE)

## Beschreibung

Die Erfindung betrifft Leuchstoffe auf der Basis von mit Mangan aktiviertem Zinksilikat ($Zn_2SiO_4$ : Mn), sowie ein Verfahren zu deren Herstellung.

Leuchtstoffe sind feste Substanzen, die befähigt sind, nach Energieabsorption (z. B. Tageslicht, Ultraviolett-, Röntgen- oder Korpuskularstrahlen) Licht auszusenden, das im allgemeinen eine größere Wellenlänge aufweist als sie die Absorbierte Strahlung besitzt. Die Lichtausstrahlung findet während der Erregung selbst statt und in verschieden langen Zeiträumen danach, die von Millisekunden bis Stunden reichen können.

Leuchtstoffe finden verbreitet Anwendung, wie beispielsweise in der Beleuchtungstechnik zur Erhöhung oder Energieausbeute bei Quecksilberlampen, in der Röntgendiagnostik oder bei der Beschichtung von Fernsehröhren zur Sichtbarmachung des modulierten Elektronenstrahls. Außerdem werden sie als Überzüge für keramische Pr dukte verwendet, insbesondere in Glasuren für keramische Fliesen.

Leuchtfähig sind nur wenige anorganische Verbindungen. Im allgemeinen wird die Leuchtfähigkeit erst durch eine Aktivierung erworben, zum Beispiel durch Einbau kleiner Mengen an kristallgitterfremden Ionen (Aktivatoren) in das Kristallgitter (Wirtsgitter) der anorganischen Verbindung (Grundmaterial). Bei den aktivatorhaltigen Leuchtstoffen handelt es sich daher um kristallisierte Verbindungen, in denen einige Kationen des Grundmaterials durch fremde Kationen ersetzt sind. Die eingebauten Kationen mit der sie umgebenden Schar von Anionen hat man dabei als sogenannte Leuchtzentren aufzufassen, die für die charakteristischen Absorptionen und Emissionen verantwortlich sind.

Von Bedeutung als Grundmaterial für die Leuchtstoffe sind vor allem Salze der Erdalkalien und ihrer Nebengruppenelemente Zink und Kadmium, wie Phosphate, Silikate, Borate, Aluminate und Oxide. Als Aktivatoren benutzt man vorzugsweise die Seltenen Erden und Schwermetalle, wie Mangan, Blei, Zinn oder Antimon.

Die Leuchtstoffe müssen im allgemeinen sehr rein sein und ein möglichst störstellenfreies Kristallgitter besitzen, da Verunreinigungen in den Ausgangsmaterialien als Löschzentren wirken und die Leuchtintensität der Leuchtstoffe herabsetzen. Ähnlich wirken Gitterdefekte. Beim mechanischen Zekleinern der Verbindungen wird die Leuchfähigkeit beeinträchtigt und kann im Extremfall völlig zerstört werden.

Die bisher bekannten Leuchtstoffe haben den weiteren Nachteil, daß sie zum großen Teil nicht temperaturstabil sind und sich in vielen Glasfritten auflösen. Sie sind daher als Farbkörper in Glasuren für keramische Fliesen nicht geeignet, die Brenntemperaturen von über 700 bis 800 °C erfordern.

Mit Mangan aktiviertes Zinkorthosilikat ($Zn_2SiO_2$ : Mn), das in der Natur als Willemit vorkommt, ist ein bekannter Leuchtstoff, der bei Anregung mit kurzwelligem Ultraviolett (254 um) im grünen Bereich emittiert. Zur synthetischen Herstellung dieses Leuchtstoffes müssen hochreine Ausgangsverbindungen in Form von Zinkoxid, Siliziumoxid und Mangankarbonat eingesetzt werden, was das Endprodukt erheblich verteuert. Außerdem darf der Leuchtstoff nach der letzten Glühung nicht mehr gemahlen werden, da sonst die Leuchtkraft vermindert wird.

Aus der EP-PS 15 382 sind Leuchtstoffe auf der Basis von mit Mangan dotiertem Zinksilikat ($Zn_2SiO_4$ : Mn) bekannt, bei denen ein Teil des Siliziums durch Ionenpaare aus den Gruppen III A und V A des Periodischen Systems der Elemente substituiert ist. Auch diese Leuchtstoffe müssen aus hochreinen Komponenten durch Glühen hergestellt werden, wobei das Endprodukt ebenfalls mahlempfindlich und nicht beständig gegen die Mehrzahl der üblichen Glasuren ist.

Es war daher Aufgabe der vorliegenden Erfindung, Leuchtstoffe auf der Basis von mit Mangan aktiviertem Zinksilikat ($Zn_2SiO_4$ : Mn) zu entwickeln, die bei praktisch gleicher Leuchtintensität aus handelsüblichen Ausgangskomponenten mit geringerem Reinheitsgrad hergestellt werden können, die nicht mahlempfindlich, temperaturstabil und chemisch stabiler gegen keramische Glasuren sind als die bekannten Leuchtstoffe. Außerdem sollte ein Verfahren zur Herstellung dieser Leuchtstoffe gefunden werden.

Diese Aufgabe wurde erfindungsgemäß dadurch gelöst, daß sie aus

1,5 bis 93,9 Mol% Zinkoxid (ZnO)
5 bis 90 Mol% Siliziumoxid ($SiO_2$)
0,9 bis 2,0 Mol% Manganoxid (MnO)
0,1 bis 25 Mol% Alkalioxid und/oder Erdalkalioxid und/oder Titanoxid ($TiO_2$) und/oder Zirkoniumoxid ($ZrO_2$) und/oder Chromoxid ($Cr_2O_3$) und/oder Bleioxid (PbO) und
0,1 bis 25 Mol% Aluminiumoxid ($Al_2O_3$)
bestehen.

Vorzugsweise enthalten die Leuchtstoffe

10 bis 60 Mol% Zinkoxid (ZnO)
20 bis 70 Mol% Siliziumoxid ($SiO_2$)
1 bis 1,8 Mol% Manganoxid (MnO)

2

3 bis 20 Mol% Alkalioxid und/oder Erdalkalioxid und/oder Titanoxid ($TiO_2$) und/oder Zirkonium-oxid ($ZrO_2$) und/oder Chromoxid ($Cr_2O_3$) und/oder Bleioxid (PbO) und
1 bis 20 Mol% Aluminiumoxid ($Al_2O_3$).

Diese leuchtintensive Leuchtstoffe lassen sich aus handelsüblichen Ausgangskomponenten in nichthochreiner Qualität herstellen, sind weitgehend mahlunempfindlich und widerstandsfähig gegen die meisten keramischen Glasuren. Sie besitzen ein Anregungsmaximum bei 236 nm und ein Emissionsmaximum bei 545 nm in grünen Bereich mit einer Halbwertsbreite von 25 nm.

Besonders unempfindliche und leuchtintensive Leuchtstoffe erhält man im folgenden Bereich :

19 bis 25 Mol% Zinkoxid (ZnO)
60 bis 70 Mol% Siliziumoxid ($SiO_2$)
1,2 bis 1,7 Mol% Manganoxid (MnO)
9 bis 14 Mol% Alkalioxid und/oder Erdalkalioxid und/oder Titanoxid ($TiO_2$) und/oder Zirkonium-oxid ($ZrO_2$) und/oder Chromoxid ($Cr_2O_3$) und/oder Bleioxid (PbO) und
1,1 bis 6 Mol% Aluminiumoxid ($Al_2O_3$).

Vorzugsweise verwendet man ein Erdalkalioxid, insbesondere Kalziumoxid (CaO). Je nach Art des eingebauten Oxids wird die Emissionsbande geringfügig verschoben, wobei die Alkalioxide, MgO und $TiO_2$ die Emissionsbande in den gelblichen Bereich, $ZrO_2$, $Cr_2O_3$ und PbO in den bläulichen Bereich verschieben.

Zur Herstellung der erfindungsgemäßen Leuchtstoffe werden handelsübliche Ausgangsstoffe, wie beispielsweise Zinkoxid oder -karbonat, Kieselsäure, Mangankarbonat oder -chlorid, Kalkspat und Kaolin, zerkleinert und gut gemischt, dann leicht gepresst und in einer Festkörperreaktion bei 850 bis 1 500 °C während 0,5 bis 6 Stunden an der Luft geglüht. Anschießend kann das Glühprodukt durch Mahlen zerkleinert werden.

Vorzugsweise wird bei 1 000 bis 1 100 °C während 1 bis 3 Stunden geglüht.

Beispielsweise werden 22,1 g Zinkoxid, 48,3 g Kieselsäure, 3,0 g Manganchlorid ($MnCl_2$ $2H_2O$), 15,9 g Kalkspat und 10,7 g Kaolin zerkleinert und trocken während 15 Minuten in einem Mischer gemischt. Anschließend wird das Gemenge in einem Tiegel durch Eindrücken verdichtet und in einen Kammerofen gegeben, der mit ca. 200 °C pro Stunde aufgeheizt wird. Bei 1 050 °C wird 90 Minuten geglüht und das Glühgut danach abgekühlt und zerkleinert. Der so hergestellte Leuchtstoff ist temperaturstabil und verliert beim Mahlen und Pressen nicht wahrnehmbar an Leuchtkraft.

Außerdem ist er widerstandsfähig gegen die meisten keramischen Glasuren.

Folgende Leuchtstoffe wurden nach diesem Verfahren hergestellt :

| ZnO [Mol%] | SiO$_2$ [Mol%] | MnO [Mol%] | MexOy [Mol%] | Al$_2$O$_3$ [Mol%] |
|---|---|---|---|---|
| 24,2 | 67,4 | 1,8 | 2,8 CaO | 3,8 |
| 22,4 | 52,6 | 1,6 | 5,1 MgO | 3,9 |
| 20,1 | 64,0 | 1,0 | 11,7 Na$_2$O | 3,2 |
| 21,1 | 57,4 | 1,9 | 16,2 TiO$_2$ | 3,4 |
| 20,8 | 50,3 | 2,0 | 23,4 CaO | 3,5 |
| 2,9 | 86,4 | 1,8 | 6,8 Cr$_2$O$_3$ | 2,1 |
| 5,0 | 76,7 | 1,8 | 12,4 ZrO$_2$ | 4,1 |
| 18,5 | 64,0 | 1,1 | 12,8 PbO | 3,6 |
| 42,4 | 40,0 | 1,2 | 13,4 CaO | 3,0 |
| 72,6 | 11,3 | 1,5 | 12,1 CaO | 2,5 |
| 90,1 | 7,3 | 0,9 | 1,5 MgO | 0,2 |
| 25,4 | 48,5 | 1,8 | 10,1 BaO | 14,2 |
| 22,2 | 41,1 | 1,7 | 12,1 CaO | 22,9 |
| 8,1 | 86,1 | 1,2 | 2,6 K$_2$O | 2,0 |

**Patentansprüche**

1. Leuchtstoffe auf der Basis von mit Mangan aktiviertem Zinksilikat ($Zn_2SiO_4$ : Mn), dadurch gekennzeichnet, daß sie aus

1,5 bis 93,9 Mol% Zinkoxid (ZnO)
5 bis 90 Mol% Siliziumoxid ($SiO_2$)
0,9 bis 2 Mol% Manganoxid (MnO)
0,1 bis 25 Mol% Alkalioxid und/oder Erdalkalioxid und/oder Titanoxid ($TiO_2$) und/oder Zirkonium-oxid ($ZrO_2$) und/oder Chromoxid ($Cr_2O_3$) und/oder Bleioxid (PbO) und
0,1 bis 25 Mol% Aluminiumoxid ($Al_2O_3$)

bestehen

2. Leuchtstoffe nach Anspruch 1, dadurch gekennzeichnet, daß sie aus

10 bis 60 Mol% Zinkoxid (ZnO)
20 bis 70 Mol% Siliziumoxid ($SiO_2$)
1 bis 1,8 Mol% Manganoxid (MnO)
3 bis 20 Mol% Alkalioxid und/oder Erdalkalioxid und/oder Titanoxid ($TiO_2$) und/oder Zirkonium-oxid ($ZrO_2$) und/oder Chromoxid ($Cr_2O_3$) und/oder Bleioxid (PbO) und
1 bis 20 Mol% Aluminiumoxid ($Al_2O_3$)

bestehen

3. Leuchtstoffe nach Anspruch 1 und 2, dadurch gekennzeichnet, daß sie aus

19 bis 25 Mol% Zinkoxid (ZnO)
60 bis 70 Mol% Siliziumoxid ($SiO_2$)
1,2 bis 1,7 Mol% Manganoxid (MnO)
9 bis 14 Mol% Alkalioxid und/oder Erdalkalioxid und/oder Titanoxid ($TiO_2$) und/oder Zirkonium-oxid ($ZrO_2$) und/oder Chromoxid ($Cr_2O_3$) und/oder Bleioxid (PbO) und
11 bis 6 Mol% Alumniumoxid ($Al_2O_3$)

bestehen.

4. Vefahren zur Herstellung von Leuchtstoffen nach Anspruch 1 bis 3, dadurch gekennzeichnet, daß die Ausgangskomponenten in Oxidform oder in Form einer Verbindung, die beim Erhitzen in das Oxid übergeht, in den entsprechenden Molverhältnissen zerkleinert und gut gemischt, dann leicht gepresst und in einer Festkörperreaktion bei 850 bis 1 500 °C während 0,5 bis 6 Stunden an der Luft geglüht werden.

5. Verfahren zur Herstellung von Leuchtstoffen nach Anspruch 4, dadurch gekennzeichnet, daß bei 1 000 bis 1 100 °C während 1 bis 3 Stunden geglüht wird.

**Claims**

1. Luminescent material based on zinc silicate activated with manganese ($Zn_2SiO_4$ : Mn), charac-terized in that it consists of

1.5 to 93.9 mol% of zinc oxide (ZnO)
5 to 90 mol% of silicon oxide ($SiO_2$)
0.9 to 2.0 mol% of manganese oxide (MnO)
0.1 to 25 mol% of alkali metal oxide and/or alkaline earth metal oxide and/or titanium oxide ($TiO_2$) and/or zirconium oxide ($ZrO_2$) and/or chromium oxide ($Cr_2O_3$) and/or lead oxide (PbO) and
0.1 to 25 mol% of aluminium oxide ($Al_2O_3$).

2. Luminescent material according to Claim 1, characterized in that it consists of

10 to 60 mol% of zinc oxide (ZnO)
20 to 70 mol% of silicon oxide ($SiO_2$)
1 to 1.8 mol% of manganese oxide (MnO)
3 to 20 mol% of alkali metal oxide and/or alkaline earth metal oxide and/or titanium oxide ($TiO_2$) and/or zirconium oxide ($ZrO_2$) and/or chronium oxide ($Cr_2O_3$) and/or lead oxide (PbO) and
1 to 20 mol% of aluminium oxide ($Al_2O_3$).

3. Luminescent material according to Claim 1 and 2, characterized in that it consists of

19 to 25 mol% of zinc oxide (ZnO)
60 to 70 mol% of silicon oxide ($SiO_2$)
1.2 to 1.7 mol% of manganese oxide (MnO)
9 to 14 mol% of alkali metal oxide and/or alkaline earth metal oxide and/or titanium oxide ($TiO_2$) and/or zirconium oxide ($ZrO_2$) and/or chromium oxide ($Cr_2O_3$) and/or lead oxide (PbO) and
11 to 6 mol% of aluminium oxide ($Al_2O_3$).

4. Process for the preparation of luminescent materials according to Claim 1 to 3, characterized in that the starting components in oxide form or in the form of a compound which is converted to the oxide upon heating are comminuted in the appropriate molar ratios and thoroughly mixed, then slightly compressed and ignited in a solid state reaction in air at 850 to 1 500 °C for 0.5 to 6 hours.

5. Process for the preparation of luminescent materials according to Claim 4, characterized in that the ignition is carried out at 1 000 to 1 100 °C for 1 to 3 hours.

**Revendications**

1. Substances luminescentes à base de silicate de zinc activé au manganèse ($Zn_2SiO_4$ : Mn), caractérisées en ce qu'elles sont constituées de

1,5 à 93,9 % en mole d'oxyde de zinc (ZnO)

5 à 90 % en mole d'oxyde de silicium ($SiO_2$)

0,9 à 2,0 en mole d'oxyde de manganèse (MnO)

0,1 à 25 % en mole d'oxyde alcalin et/ou d'oxyde alcalino-terreux et/ou d'oxyde de titane ($TiO_2$) et/ou d'oxyde de zirconium ($ZrO_2$) et/ou d'oxyde de chrome ($Cr_2O_3$) et/ou d'oxyde de plomb (PbO) et

0,1 à 25 % en mole d'oxyde d'aluminium ($Al_2O_3$);

2. Substances luminescentes selon la revendication 1, caractérisées en ce qu'elles sont constituées

de 10 à 60 % en mole d'oxyde de zinc (ZnO)

de 20 à 70 % en mole d'oxyde de silicium ($SiO_2$)

de 1 à 1,8 % en mole d'oxyde de manganèse (MnO)

de 3 à 20 % en mole d'oxyde alcalin et/ou d'oxyde alcalino-terreux et/ou d'oxyde de titane ($TiO_2$) et/ou d'oxyde de zirconium ($ZrO_2$) et/ou d'oxyde de chrome ($Cr_2O_3$) et/ou d'oxyde de plomb (PbO) et

de 1 à 20 % en mole d'oxyde d'aluminium ($Al_2O_3$).

3. Substances luminescentes selon la revendication 1 ou 2, caractérisées en ce qu'elles sont constituées

de 19 à 25 % en mole d'oxyde de zinc (ZnO)

de 60 à 70 % en mole d'oxyde de silicium ($SiO_2$)

de 1,2 à 1,7 % en mole d'oxyde de manganèse (MnO)

de 9 à 14 % en mole d'oxyde alcalin et/ou d'oxyde alcalino-terreux et/ou d'oxyde de titane ($TiO_2$) et/ou d'oxyde de zirconium ($ZrO_2$) et/ou d'oxyde de chrome ($Cr_2O_3$) et/ou d'oxyde de plomb (PbO) et

de 1,1 à 6 % en mole d'oxyde d'aluminium ($Al_2O_3$).

4. Procédé pour la préparation de substances luminescentes selon l'une quelconque des revendications 1 à 3, caractérisé en ce que l'on fragmente et mélange intimement en les proportions molaires appropriées les composants de départ sous forme d'oxyde ou sous forme d'un composé qui se transforme en l'oxyde, lors du chauffage, puis on comprime légèrement le mélange et on le cuit, dans une réaction à l'état solide, à 850-1 500 °C, pendant 0,5 à 6 heures, à l'air.

5. Procédé pour la préparation de substances luminescentes selon la revendication 4, caractérisé en ce que l'on effectue la cuisson à 1 000-1 100 °C pendant 1 à 3 heures.